Europäisches Patentamt

European Patent Office

Office européen des brevets

(19)

(11) Veröffentlichungsnummer: **0 136 263**
**A2**

(12) **EUROPÄISCHE PATENTANMELDUNG**

(21) Anmeldenummer: **84810407.1**

(22) Anmeldetag: **20.08.84**

(51) Int. Cl.⁴: **C 09 D 3/58**, B 05 D 3/02, B 05 D 7/22

(30) Priorität: **25.08.83 CH 4628/83**
**19.07.84 CH 3500/84**

(43) Veröffentlichungstag der Anmeldung: **03.04.85**
**Patentblatt 85/14**

(84) Benannte Vertragsstaaten: **AT BE CH DE FR GB IT LI LU NL SE**

(71) Anmelder: **Vernicolor AG Lack- und Farbenfabrik,
CH-8627 Grüningen (CH)**

(72) Erfinder: **Widmer, Hans Rudolf, In der Hueb,
CH-8634 Hombrechtikon (CH)**
Erfinder: **Schmid, Christoph, General-Wille-Strasse 10,
CH-8706 Meilen (CH)**

(74) Vertreter: **Gachnang, Hans Rudolf, Algisserstrasse 33,
CH-8500 Frauenfeld (CH)**

(54) Duroplastischer Pulverlack und ein Metallbehälter mit einer Schweissnahtabdeckung aus einem Duroplast sowie ein Verfahren zum Beschichten der Oberfläche einer Schweissnaht eines Metallbehälters.

(57) Ein duroplastischer Pulverlack, der zur Schweissnahtabdeckung bei Metallbehältern für Lebensmittel oder Getränke geeignet ist, enthält mindestens ein aromatisches Epoxidharz, das pro Molekül im Mittel mindestens 2 reaktionsfähige Epoxidgruppen enthält, und mindestens einen sauren Polyester, der pro Molekül im Mittel mindestens 2 reaktionsfähige Carboxylgruppen enthält. Die Summe der reaktionsfähigen Epoxid- und Carboxylgruppen hat einen Wert im Bereich von 0,8 bis 2,5 mol pro kg des Pulverlacks und ihr Verhältnis liegt im Bereich von 0,8 bis 1,2. Der Pulverlack enthält als Katalysator Imidazol oder ein Alkylimidazol.

Duroplastischer Pulverlack und ein Metallbehälter mit einer
Schweissnahtabdeckung aus einem Duroplast sowie ein Verfahren zum Beschichten der Oberfläche einer Schweissnaht eines
Metallbehälters

Die Erfindung betrifft einen duroplastischen Pulverlack auf
Epoxidharzbasis und dessen Verwendung zur Schweissnahtabdeckung im Inneren von Metallbehältern für Lebensmittel oder
Getränke.

Die Erfindung betrifft auch einen Metallbehälter mit einer
Schweissnaht und einer inneren Schweissnahtabdeckung aus
einem Duroplast auf Epoxidharzbasis.

Schliesslich betrifft die Erfindung ein Verfahren zum Beschichten der Oberfläche eines eine Schweissnaht aufweisenden Metallbehälters mit einem Duroplast, bei dem ein duroplastischer Pulverlack auf Epoxidharzbasis innenseitig auf
den Metallbehälter aufgetragen und anschliessend bei erhöhter Temperatur gehärtet wird.

Es sind duroplastische Pulverlacke auf Epoxidharzbasis bekannt, die zur Abdeckung der gesamten Innenwand von Metallbehältern zur Aufnahme von Lebensmitteln oder Getränken
verwendet werden (UK Patentanmeldung, Veröffentlichung
Nr. 2 055 843 A).

Die Aufgabe der vorliegenden Erfindung besteht darin, einen duroplastischen Pulverlack für die Abdeckung der Schweissnaht im Inneren von Metallbehältern anzugeben, der bei hoher Lagerstabilität in sehr kurzer Zeit zu einem Duroplasten gehärtet werden kann, der hinreichend flexibel ist, um Verformungen des Metallbehälters folgen zu können, und lebensmittelrechtlich unbedenklich ist.

Erfindungsgemäss wird diese Aufgabe hinsichtlich des duroplastischen Pulverlacks dadurch gelöst, dass dieser mindestens ein aromatisches Epoxidharz, das pro Molekül im Mittel mindestens 2 reaktionsfähige Epoxidgruppen enthält, mindestens einen sauren Polyester, der pro Molekül im Mittel mindestens zwei reaktionsfähige Carboxylgruppen enthält, und einen Katalysator enthält und dass die Summe der reaktionsfähigen Epoxid- und Carboxylgruppen einen Wert im Bereich von 0,8 bis 2,5 Mol pro kg des Pulverlacks hat.

Vorzugsweise hat das Verhältnis der reaktionsfähigen Epoxid- und Carboxylgruppen einen Wert im Bereich von 0,67 bis 1,5.

Vorteilhafterweise beträgt der Epoxidgehalt in dem Pulverlack nach der Erfindung mindestens 0,3 Mol pro kg des Pulverlacks.

Bevorzugt enthält der erfindungsgemässe Pulverlack mindestens einen sauren Polyester mit einer Säurezahl im Bereich von 10 bis 550. Die Säurezahl bedeutet dabei die Menge an KOH in Einheiten von mg, die zur Neutralisation von 1 g des sauren Polyesters erforderlich sind.

Vorteilhafterweise ist der Katalysator aus der Gruppe der organischen Aminoverbindungen ausgewählt, insbesondere aus der Gruppe: Imidazol, alkylsubstituiertes Imidazol, Aminophenol, Dicyandiamid, Cholinsalz.

Die erfindungsgemäss zusammengesetzten duroplastischen Pulverlacke haben vorteilhafterweise bei Umgebungstemperatur eine hohe Lagerbeständigkeit und einen Erweichungspunkt im Bereich von 65 bis 100° C, so dass sie nach üblichen Verfahrensweisen leicht hergestellt und über lange Zeiten unverändert gelagert werden können.

Duroplastische Pulverlacke nach der Erfindung lassen sich bei Temperaturen über 200° C in sehr kurzer Zeit, zum Beispiel im Bereich zwischen 230 und 350° C innerhalb von 3 bis 20 Sekunden, zu einem flexiblen Duroplasten härten.

Die vorteilhaften Eigenschaften des duroplastischen Pulverlacks und des daraus durch Härtung hergestellten Duroplasten beruhen unter anderem darauf, dass trotz der hohen Lagerbeständigkeit sehr kurze Härtungszeiten erzielt werden, die die Verarbeitung in einem Durchlaufofen ermöglichen. Der Duroplast ist weitgehend resistent gegen die Einwirkung von Chemikalien und geruchs- und geschmacksfrei und bildet eine gut haftende, verformbare und sterilisierbare, beständige Beschichtung. Die Schweissnaht ist gerade auch an den Kanten gleichmässig und durchgehend abgedeckt. Dabei besitzt der gebildete Duroplast nicht nur die erforderliche Härte und hohe Schlagfestigkeit, sondern in besonderem Masse auch eine hohe Flexibilität, so dass die Abdeckung der Schweissnaht Verformungen des Metallbehälters ohne Ablösung oder Rissbildung folgen kann.

Der erfindungsgemässe duroplastische Pulverlack hat eine gegenüber bekannten Produkten bedeutend grössere Verarbeitungstoleranz, d.h. der Pulverlack ist weniger empfindlich gegen Abweichungen bei den Verarbeitungstemperaturen vom jeweiligen Sollwert, so dass Unterhärtungen oder Ueberhärtungen weniger leicht eintreten. Das "curing window" hat eine mehrfach vergrösserte Breite gegenüber bekannten Produkten. Die Aushärtung wird in wesentlich kürzerer Zeit erreicht. Vom physiologischen Standpunkt sind nicht nur das Endprodukt, sondern auch die Ausgangsprodukte weitgehend unbedenklich, so dass die Verarbeitung der Produkte zur Herstellung des Pulverlacks und dessen Auftragung keine besonderen Probleme oder Gefahren mit sich bringen.

Der erfindungsgemässe Pulverlack kann weiterhin gegebenenfalls Verlaufmittel, Pigmente, Füllstoffe, Verdickungsmittel oder auch deren Mischung enthalten, ohne dass die vorteilhaften Eigenschaften des daraus durch Härtung hergestellten flexiblen Duroplasten nachteilig beeinflusst werden.

Nach der Erfindung wird der duroplastische Pulverlack mit der vorstehend angegebenen Zusammensetzung zur Abdeckung von Schweissnähten im Inneren von Metallbehältern für Lebensmittel oder Getränke verwendet. Dies wird dadurch ermöglicht, dass der durch Härtung aus dem Pulverlack hervorgehende Duroplast eine beständige Beschichtung bildet, die allen derzeit geltenden lebensmittelrechtlichen Vorschriften genügt.

Der Metallbehälter nach der Erfindung enthält eine innere Schweissnahtabdeckung aus einem flexiblen Duroplast, der aus mindestens einem aromatischen Epoxidharz, das pro Molekül im Mittel mindestens 2 reaktionsfähige Epoxidgruppen enthält, mindestens einem sauren Polyester, der pro Molekül im Mittel mindestens 2 reaktionsfähige Carboxylgruppen enthält, besteht und einen Katalysator enthält, wobei die Summe der reaktionsfähigen Epoxid- und Carboxylgruppen einen Wert im Bereich von 0,8 bis 2,5 Mol pro kg des Pulverlacks hat. Der Duroplast bildet einen die Schweissnaht abdeckenden Streifen, der die Schweissnaht beidseitig überlappt. Vorteilhafterweise ist der Duroplast flexibel und zusammen mit dem Metallbehälter verformbar.

Bei dem Verfahren nach der Erfindung wird auf die Schweissnaht eines Metallbehälters ein Pulverlack aufgetragen und

- 5 -    0136263

anschliessend gehärtet, der mindestens ein aromatisches Epoxidharz, das pro Molekül im Mittel mindestens zwei reaktionsfähige Epoxidgruppen enthält, mindestens einen sauren Polyester, der pro Molekül im Mittel mindestens zwei reaktionsfähige Carboxylgruppen enthält, und einen Katalysator enthält und bei dem die Summe der reaktionsfähigen Epoxid- und Carboxylgruppen einen Wert im Bereich von 0,8 bis 1,5 Mol pro kg des Pulverlacks hat, zusammengesetzt und anschliessend gehärtet wird.

Die Erfindung wird nachstehend anhand von Ausführungsbeispielen näher erläutert.

In der nachfolgenden Tabelle sind verschiedene Beispiele für Zusammensetzungen von duroplastischen Pulverlacken A - H gegeben; die Mengen der Komponenten sind darin in Gewichtsteilen angegeben.

## Tabelle 1

### Zusammensetzung duroplastischer Pulverlacke

|  |  | Beispiele |  |  |  |  |  |  |  |
|---|---|---|---|---|---|---|---|---|---|
| Komponente |  | A | B | C | D | E | F | G | H |
| Epoxidharz | $E_1$ | 541 | 675 | 737 | 796 | 295 | 45 | - | 45 |
| Epoxidharz | $E_2$ | - | - | - | - | - | 621,4 | - | 492,3 |
| Epoxidharz | $E_3$ | - | - | - | - | - | 148,6 | 187 | 117,7 |
| Polyester | $P_1$ | - | - | - | - | 700 | - | - | - |
| Polyester | $P_2$ | 496 | 230 | 138 | - | - | - | 813 | 240 |
| Polyester | $P_3$ | - | 90 | 120 | 125 | - | 180 | - | 100 |
| Verlaufmittel |  | 5 | 5 | 5 | 4 | 5 | 5 | 5 | 5 |
| Dicyanidamid |  | - | 20 | 20 | 10 | - | 2 | - | - |
| Imidazol |  | 8 | - | - | - | 10 | - | 8 | - |
| Cholinchlorid |  | - | - | - | - | - | - | - | 10 |

In Tabelle 1 haben die Abkürzungen folgende Bedeutung:

$E_1$ : Epoxidharz auf der Basis Bisphenol A;
Epoxidgehalt 1,35 Mol/kg; Erweichungspunkt 98° C

$E_2$ : Epoxidharz auf der Basis Bisphenol A;
Epoxidgehalt 0,55 Mol/kg; Erweichungspunkt 126° C

$E_3$ : Epoxidharz auf der Basis Phenol-Novolack;
Epoxidgehalt 5,6 Mol/kg; Viskosität 45 000 mPas bei
50° C

$P_1$ : Polyester; Säurezahl 30; Schmelzindex 10

$P_2$ : Polyester; Säurezahl 60; Erweichungspunkt 115° C

$P_3$ : Polyester auf der Basis Trimellithsäureanhydrid-Ethylenglykol; Säurezahl 470; Erweichungspunkt 120° C

Die verwendeten Produkte sind handelsübliche Produkte. Anstelle der speziell aufgeführten Epoxidharze $E_1$ bis $E_3$ können auch andere aromatische Epoxidharze oder deren Mischungen eingesetzt werden, deren Epoxidäquivalentgewicht im Bereich von 500 bis 20'000, bevorzugt im Bereich von 800 bis 3'000 liegt. Anstelle der speziell aufgeführten Polyester $P_1$ bis $P_3$ können auch andere saure Polyester oder deren Gemische mit einer Säurezahl im Bereich von 10 bis 550 und ebenfalls solche verwendet werden, in denen mindestens ein Teil der sauren Gruppen als Anhydride vorliegt. Polyester dieser Art zur Verwendung in Pulverlacken sind im Handel erhältlich.

Die Erweichungspunkte wurden in Uebereinstimmung mit der Vorschrift DIN 51 920 bestimmt.

Der Schmelzindex des Polyesters $P_1$ wurde in Uebereinstimmung mit der Vorschrift SATM D 1238 bestimmt.

Als Katalysatoren für die Härtung kommen organische Aminoverbindungen in Betracht, von denen einige in der Tabelle angegeben sind. Besonders bewährt haben sich dabei tertiäre Aminoverbindungen und unter diesen insbesondere Imidazol und seine Alkylderivate.

Zur Herstellung der duroplastischen Pulverlacke gemäss den Beispielen A bis H in Tabelle 1 werden die Komponenten in einen Rhönradmischer gegeben und 15 Minuten lang gemischt; die Mischung wird anschliessend in einem Extruder (Typ PR 46 der Fa. Buss, Pratteln, Schweiz) bei einer konstant gehaltenen Schneckentemperatur von $30^{\circ}$ C und einer konstant gehaltenen Manteltemperatur von $90^{\circ}$ C homogenisiert. Das Extrudat wird mit üblichen Mitteln vorzerkleinert und anschliessend in einer Stiftsmühle gemahlen; das so erhaltene Pulver weist ein Maximum der Korngrössenverteilung bei einer Korngrösse von ca. 55 um auf.

Die vorstehend beschriebenen duroplastischen Pulverlacke haben eine hohe Lagerbeständigkeit und können daher ohne chemische Veränderung über verhältnismässig lange Zeiten gelagert werden, ohne dass ihre Wirksamkeit dadurch beeinträchtigt wird.

Nach den in der Tabelle angegebenen Formulierungen zusammengesetzte duroplastische Pulverlacke haben einen Erweichungspunkt im Bereich von 65 bis 100° C. Sie sind daher bei üblichen Umgebungstemperaturen pulverförmig und frei von Verklebungen und Zusammenbackungen. Andererseits können sie in einem Temperaturbereich hergestellt und verarbeitet werden, der nach üblichen Verfahrensweisen gut zugänglich ist.

Für die Weiterverarbeitung des duroplastischen Pulverlacks, insbesondere für die gleichförmige Verteilung des durch die nachfolgende Härtung gebildeten Duroplasten über die Schweissnaht und die gleichmässige Abdeckung der Kanten der Schweissnaht, hat es sich als vorteilhaft erwiesen, den Pulverlack nach der Durchmischung bei einer Temperatur im Bereich von 50 bis 100° C in einem Zeitraum zu tempern, der eine Stunde bis mehrere Tage umfassen kann. Günstig für diesen Zweck durch eine entsprechende Beeinflussung der Schmelzviskosität des duroplastischen Pulverlacks hat sich auch der Zusatz eines handelsüblichen Verlaufmittels erwiesen. Solche Verlaufmittel bestehen üblicherweise vorwiegend aus Polyacrylsäureestern; in den Beispielen A bis H der Tabelle 1 wurde das Verlaufmittel Acrylon MFP (Fa. Protex) verwendet.

Der wie vorstehend beschriebene duroplastische Pulverlack wird vorteilhafterweise durch elektrostatische Aufladung auf die Schweissnaht des jeweiligen Metallbehälters aufgebracht. Dabei ist es günstig, dass der Pulverlack unmittelbar nach dem Schweissvorgang auf die noch heisse Schweissnaht aufgebracht werden kann, ohne dass dadurch die Verteilung des Duroplasten über die Schweissnaht und seine Eigenschaften nachteilug beeinflusst werden.

Der Metallbehälter, dessen Schweissnaht so mit dem duroplastischen Pulverlack versehen worden ist, wird anschliessend einer Hitzebehandlung unterworfen, während derer der duroplastische Pulverlack in einen Duroplasten umgewandelt wird. Diese Hitzebehandlung kann auf verschiedene Weise erfolgen. Im technischen Betrieb hat es sich als vorteilhaft erwiesen, die Metallbehälter mit der Schweissnahtabdeckung durch einen Durchlaufofen zu fördern, in dem der die Schweissnaht abdeckende Pulverlack rasch auf Temperaturen bei oder über 200° C erhitzt und zu einem flexiblen Duroplasten gehärtet wird.

Die Härtung des duroplastischen Pulverlacks kann dabei je nach den Anforderungen unter unterschiedlichen Bedingungen vorgenommen werden; dabei ist zu berücksichtigen, dass bei relativ niedrigen Härtungstemperaturen relativ längere Härtungszeiten benötigt werden. In der Praxis hat sich herausgestellt, dass bei Härtungstemperaturen im Bereich von 230 bis 350° C eine vollständige Härtung des duroplastischen Pulverlacks innerhalb einer Zeit von 20 bis 3 Sekunden erzielt wird. Dabei kann der Durchlaufofen bei konstanter Temperatur betrieben werden oder ein Temperaturprofil aufweisen, das nach den jeweiligen Gegebenheiten eingestellt wird.

Entsprechende, hier nicht im einzelnen aufgeführte Versuche haben ergeben, dass die vorstehend beschriebenen duroplastischen Pulverlacke ein dadurch ausgezeichnetes Härtungsverhalten besitzen, dass sie ein sehr breites Härtungsspektrum besitzen. Das bedeutet, dass ein relativ grosser Temperaturbereich besteht, innerhalb dessen die erstrebte vorteilhafte Härtung nicht durch Nebenreakionen wie Ueberhärtung oder thermische Abbaureaktionen beeinträchtigt wird. Dies ist besonders wichtig, da im technischen Betrieb eines Durchlaufofens die Härtungstemperaturen und die Härtungszeiten nicht mit der Präzision eingehalten werden können, wie es beispielsweise bei einem duroplastischen Pulverlack mit einem engen Härtungsspektrum notwendig wäre.

Weiterhin hat sich gezeigt, dass dem duroplastischen Pulverlack ohne Beeinträchtigung der gewünschten Eigenschaften des Duroplasten bis zu gewissem Umfang weitere Zusätze zugemischt werden können, zum Beispiel ausser den vorgenannten Verlaufmitteln auch Pigmente, Füllstoffe, Verdickungsmittel oder deren Mischung, wobei jedoch der Füllstoff, der meist aus einem anorganischen Material besteht, einen Mengenanteil von 30 Gew.-% des Pulverlacks nicht übersteigen sollte.

Nach der Härtung bildet der Duroplast einen die Schweissnaht des Metallbehälters abdeckenden Streifen, der die Schweissnaht beidseitig überlappt. Der aus den in der vorstehenden Tabelle angegebenen Formulierungen erhaltene Pulverlack erhärtet zu einem Duroplasten, der nicht nur die notwendige Schlagfestigkeit besitzt, sondern darüber hinaus auch in einem hinreichenden Masse flexibel ist, so dass mit einer solchen Schweissnahtabdeckung versehene Metallbehälter ohne weiteres weiter verformt werden können, zum Beispiel durch Sickenbildung, ohne dass dadurch der Duroplast abplatzt, einreisst oder auf andere Weise beschädigt wird. Der so hergestellte Duroplast besitzt auch eine für viele Anwendungszwecke ausreichend hohe Resistenz gegen die Einwirkung von Chemikalien und genügt den derzeit in den meisten Ländern bestehenden lebensmittelrechtlichen Vorschriften.

Zur weiteren Untersuchung der duroplasten Pulverlacke gemäss den Beispielen A bis H in Tabelle 1 wurden diese mittels einer handelsüblichen elektrostatischen Sprühpistole (Fa. Gema, St. Gallen, Schweiz) jeweils auf ungereinigtes Weissblech aufgetragen. Das so behandelte Weissblech wird 40 sec. lang in einen auf 280° C vorgeheizten Trockenschrank eingebracht, wodurch ein homogener Lackfilm mit einer Schichtdicke von ca. 25 $\mu$m entsteht.

Die so erhaltenen Proben wurden einer Reihe üblicher Prüfungen unterworfen. Insbesondere dienten dabei die folgenden Methoden zur Selektion und Bewertung:

Schlagfaltprüfung nach Erichsen.

Bewertung:  beschädigte Kantenlänge $\leq$ 1,5 cm:  gut 1,6 - 2,0 cm:  akzeptabel

$>$ 2,0 cm:  ungeeignet

Sterilisationstest:
Einstündige Einwirkung von Trinkwasser bei 121° C
Bewertung:  unverändert, geringes Anlaufen:  gut deutlich weisses Anlaufen oder Bläschenbildung:                    unbrauchbar

Die Ergebnisse der Prüfungen sind in Tabelle 2 dargestellt.

Tabelle 2

Verhalten der Pulverlacke A bis H im Schlagfalt- und im Sterilisationstest

| Beispiel | - COOH (Mol/kg) | △̊ (Mol/kg) | - COOH + △̊ (Mol/kg) | Ueberschuss an △̊ (%) | COOH/△̊ | Schlagfalttest (cm) | Sterilisationstest |
|---|---|---|---|---|---|---|---|
| A | 0,53 | 0,66 | 1,20 | + 25 | 0,80 | 0,0 | gut |
| B | 0,98 | 0,89 | 1,88 | - 9,1 | 1,10 | 1,5 | gut |
| C | 1,13 | 0,98 | 2,11 | - 13,8 | 1,15 | 2,0 | gut |
| D | 1,12 | 1,16 | 2,27 | + 3,3 | 0,97 | 2,0 | gut |
| E | 0,37 | 0,41 | 0,78 | + 8,0 | 0,90 | 0,0 | unbrauchbar (s.st.Blushing) |
| F | 1,50 | 1,25 | 2,75 | - 16,5 | 1,2 | 3,0 | gut |
| G | 0,87 | 1,04 | 1,91 | + 19,5 | 0,84 | 0,0 | gut |
| H | 1,10 | 1,00 | 2,10 | - 8,7 | 1,1 | 1,5 | gut |

Tabelle 2 zeigt durch die Beispiele A bis D, dass die Ergebnisse innerhalb der genannten Grenzen für die Summe der funktionsfähigen Epoxid- und Carboxylgruppen weitgehend unabhängig von der Zusammensetzung der duroplastischen Pulverlacke ist. Innerhalb dieser Grenzen sind auch grössere Abweichungen von der stöchiometrischen Zusammensetzung zulässig, vgl. die Beispiele A, C und G. Die Beispiele E und F zeigen, dass Abweichungen von diesen Grenzen nach oben oder unten zu unbrauchbaren Produkten führen.

- 14 -    0136263

Patentansprüche

1.  Duroplastischer Pulverlack, enthaltend:

mindestens ein aromatisches Epoxidharz, das pro Molekül im Mittel mindestens 2 reaktionsfähige Epoxidgruppen enthält,

mindestens einen sauren Polyester, der pro Molekül im Mittel mindestens 2 reaktionsfähige Carboxylgruppen enthält,

wobei die Summe der reaktionsfähigen Epoxidgruppen und Carboxylgruppen einen Wert im Bereich von 0,8 bis 25,5 Mol pro kg des Pulverlacks hat, und

einen Katalysator.

2.  Pulverlack nach Anspruch 1, dadurch gekennzeichnet, dass das aromatische Epoxidharz ein Epoxidäquivalentgewicht im Bereich von 500 bis 20'000 hat.

3.  Pulverlack nach Anspruch 2, dadurch gekennzeichnet, dass das aromatische Epoxidharz ein Epoxidäquivalentgewicht im Bereich von 800 bis 3'000 hat.

4.  Pulverlack nach einem der Ansprüche 1 bis 3, dadurch gekennzeichnet, dass die Summe der reaktionsfähigen Epoxidgruppen und Carboxylgruppen einen Wert im Bereich von 1,0 bis 2,0 Mol pro kg des Pulverlacks hat.

5.  Pulverlack nach einem der Ansprüche 1 bis 4, dadurch gekennzeichnet, dass das Verhältnis der reaktionsfähigen Carboxylgruppen und Epoxidgruppen in Mol pro kg des Pulverlacks einen Wert im Bereich von 0,67 bis 1,5 hat.

0136263

6. Pulverlack nach Anspruch 5, dadurch gekennzeichnet, dass das Verhältnis der reaktionsfähigen Carboxylgruppen und Epoxidgruppen in Mol pro kg des Pulverlacks einen Wert im Bereich von 0,8 bis 1,2 hat.

7. Pulverlack nach einem der Ansprüche 1 bis 3, dadurch gekennzeichnet, dass der Epoxidgehalt mindestens 0,3 Mol pro kg des Pulverlacks beträgt.

8. Pulverlack nach einem der Ansprüche 1 bis 7, dadurch gekennzeichnet, dass der saure Polyester eine Säurezahl im Bereich von 10 bis 550 hat.

9. Pulverlack nach einem der Ansprüche 1 bis 8, dadurch gekennzeichnet, dass der Katalysator aus der Gruppe der organischen Aminoverbindungen ausgewählt ist.

10. Pulverlack nach Anspruch 9, dadurch gekennzeichnet, dass der Katalysator aus der Gruppe Imidazol, Alkylimidazol, Aminophenol, Dicyandiamid, Cholinsalze ausgewählt ist.

11. Pulverlack nach einem der Ansprüche 1 bis 10, dadurch gekennzeichnet, dass der Pulverlack bei Umgebungstemperatur eine hohe Lagerbeständigkeit aufweist.

12. Pulverlack nach einem der Ansprüche 1 bis 11, dadurch gekennzeichnet, dass der Pulverlack bei Temperaturen bei oder über 200$^O$ C in sehr kuzrer Zeit zu einem flexiblen Duroplasten härtbar ist.

13. Pulverlack nach Anspruch 12, dadurch gekennzeichnet, dass der Pulverlack bei einer Temperatur im Bereich von 230 bis 350$^O$ C zu einem flexiblen Duroplasten härtbar ist.

14. Pulverlack nach Anspruch 12 oder 13, dadurch gekennzeichnet, dass der Pulverlack in einer Zeit von 3 bis 20 Sekunden zu einem flexiblen Duroplasten härtbar ist.

15. Pulverlack nach einem der Ansprüche 1 bis 14, dadurch gekennzeichnet, dass der Pulverlack ein breites Härtungsspektrum besitzt.

16. Pulverlack nach einem der Ansprüche 1 bis 15, dadurch gekennzeichnet, dass der Pulverlack einen aus der Gruppe: Verlaufmittel, Pigment, Füllstoff, Verdickungsmittel, oder deren Mischung ausgewählten Zusatz enthält.

17. Pulverlack nach Anspruch 16, dadurch gekennzeichnet, dass der Anteil des Füllstoffs maximal 30 Gew.-% beträgt, bezogen auf das Gesamtgewicht des Pulverlacks = 100.

18. Verwendung eines duroplastischen Pulverlacks, enthaltend mindestens ein aromatisches Epoxidharz, das pro Molekül im Mittel mindestens 2 reaktionsfähige Epoxidgruppen enthält, mindestens einen sauren Polyester, der pro Molekül im Mittel mindestens 2 reaktionsfähige Carboxylgruppen enthält, wobei die Summe der reaktionsfähigen Epoxidgruppen und Carboxylgruppen einen Wert im Bereich von 0,8 bis 2,5 Mol pro kg des Pulverlacks hat, und einen Katalysator, zur Schweissnahtabdeckung im Inneren von Metallbehältern für Lebensmittel oder Getränke.

19. Metallbehälter mit einer Schweissnaht und einer inneren Schweissnahtabdeckung aus einem Duroplasten, dadurch gekennzeichnet, dass ein flexibler Duroplast

aus mindestens einem aromatischen Epoxidharz, das pro Molekül im Mittel mindestens 2 reaktionsfähige Epoxidgruppen enthält,

aus mindestens einem sauren Polyester, der pro Molekül im Mittel mindestens 2 reaktionsfähige Carboxylgruppen enthält,

wobei die Summe der reaktionsfähigen Epoxidgruppen und Carboxylgruppen einen Wert im Bereich von 0,8 bis 2,5 Mol pro kg des Pulverlacks hat, und

aus einem Katalysator gebildet ist.

20. Metallbehälter nach Anspruch 19, dadurch gekennzeichnet, dass die Summe der reaktionsfähigen Epoxidgruppen und Carboxylgruppen einen Wert im Bereich von 1,0 bis 2,0 Mol pro kg des Pulverlacks hat.

21. Metallbehälter nach Anspruch 19 oder 20, dadurch gekennzeichnet, dass das Verhältnis der reaktionsfähigen Carboxylgruppen und Epoxidgruppen in Mol pro kg des Pulverlacks einen Wert im Bereich von 0,67 bis 1,5 hat.

22. Metallbehälter nach Anspruch 21, dadurch gekennzeichnet, dass das Verhältnis der reaktionsfähigen Epoxidgruppen und Carboxylgruppen in Mol pro kg des Pulverlacks einen Wert im Bereich von 0,8 bis 1,2 hat.

23. Metallbehälter nach einem der Ansprüche 19 bis 22, dadurch gekennzeichnet, dass der Katalysator aus der Gruppe der organischen Aminoverbindungen ausgewählt ist.

24. Metallbehälter nach Anspruch 23, dadurch gekennzeichnet, dass der Katalysator aus der Gruppe Imidazol, Alkylimidazol, Aminophenol, Dicyandiamid, Cholinsalze ausgewählt ist.

25. Metallbehälter nach einem der Ansprüche 19 bis 24, dadurch gekennzeichnet, dass der Duroplast einen aus der Gruppe: Verlaufmittel, Pigment, Füllstoff, Verdickungsmittel, oder deren Mischung ausgewählten Zusatz enthält.

26. Metallbehälter nach Anspruch 25, dadurch gekennzeichnet, dass der Duroplast maximal 30 Gew.-% des Füllstoffs enthält, bezogen auf das Gesamtgewicht des Duroplasten = 100.

27. Metallbehälter nach einem der Ansprüche 19 bis 26, dadurch gekennzeichnet, dass der Duroplast einen die Schweissnaht abdeckenden Streifen bildet, der die Schweissnaht beidseitig überlappt.

28. Metallbehälter nach einem der Ansprüche 19 bis 27, dadurch gekennzeichnet, dass der Duroplast flexibel und zusammen mit dem Metallbehälter verformbar ist.

29. Verfahren zum Beschichten der Oberfläche eines eine Schweissnaht aufweisenden Metallbehälters mit einem Duroplasten, bei dem ein duroplastischer Pulverlack auf Epoxidharzbasis innenseitig auf den Metallbehälter aufgetragen und anschliessend bei erhöhter Temperatur gehärtet wird, dadurch gekennzeichnet, dass auf die Schweissnaht ein Pulverlack aufgetragen wird, der aus mindestens einem aromatischen Epoxidharz, das pro Molekül im Mittel mindestens 2 reaktionsfähige Epoxidgruppen enthält, aus mindestens einem sauren Polyester, der pro Molekül im Mittel mindestens 2 reaktionsfähige Carboxylgruppen enthält, wobei die Summe der reaktionsfähigen Epoxidgruppen und Carboxylgruppen einen Wert im Bereich von 0,8 bis 2,5 Mol pro kg des Pulverlacks hat, und aus einem Katalysator zusammengesetzt und anschliessend gehärtet wird.

30. Verfahren nach Anspruch 29, dadurch gekennzeichnet, dass als aromatisches Epoxidharz ein Epoxidharz mit einem Epoxidäquivalentgewicht im Bereich von 500 bis 20'000 ausgewählt wird.

31. Verfahren nach Anspruch 30, dadurch gekennzeichnet, dass als aromatisches Epoxidharz ein Epoxidharz mit einem Epoxidäquivalentgewicht im Bereich von 800 bis 3'000 ausgewählt wird.

32. Verfahren nach einem der Ansprüche 29 bis 31, dadurch gekennzeichnet, dass das aromatische Epoxidharz, der saure Polyester und der Katalysator so zusammengesetzt werden, dass die Summe der reaktionsfähigen Epoxidgruppen und Carboxylgruppen einen Wert im Bereich von 1,0 bis 2,0 Mol pro kg des Pulverlacks hat.

33. Verfahren nach einem der Ansprüche 29 bis 32, dadurch gekennzeichnet, dass das aromatische Epoxidharz, der saure Polyester und der Katalysator zu einem Pulverlack zusammengesetzt werden, bei dem das Verhältnis der reaktionsfähigen Epoxidgruppen und Carboxylgruppen in Mol pro kg des Pulverlacks einen Wert im Bereich von 0,67 bis 1,5 hat.

34. Verfahren nach Anspruch 33, dadurch gekennzeichnet, dass das Verhältnis der reaktionsfähigen Epoxidgruppen und Carboxylgruppen in Mol pro kg des Pulverlacks einen Wert im Bereich von 0,8 bis 1,2 hat.

35. Verfahren nach einem der Ansprüche 29 bis 31, dadurch gekennzeichnet, dass das aromatische Epoxidharz, der saure Polyester und der Katalysator zu einem Pulverlack zusammengesetzt werden, der mindestens 0,3 Mol Epoxidgruppen pro kg enthält.

36. Verfahren nach einem der Ansprüche 29 bis 35, dadurch gekennzeichnet, dass als saurer Polyester ein Polyester ausgewählt wird, dessen Säurezahl einen Wert im Bereich von 10 bis 550 aufweist.

37. Verfahren nach einem der Ansprüche 29 bis 36, dadurch gekennzeichnet, dass der Katalysator aus der Gruppe der organischen Aminoverbindungen ausgewählt wird.

38. Verfahren nach Anspruch 37, dadurch gekennzeichnet, dass der Katalysator aus der Gruppe Imidazol, Alkylimidazol, Aminophenol, Dicyandiamid, Cholinsalze ausgewählt wird.

39. Verfahren nach einem der Ansprüche 29 bis 38, dadurch gekennzeichnet, dass der Pulverlack einen Erweichungspunkt im Bereich von 65 bis 100° C hat.

40. Verfahren nach einem der Ansprüche 29 bis 39, dadurch gekennzeichnet, dass die Komponenten des Pulverlacks vor dem Auftragen bei Temperaturen im Bereich von 65 bis 100° C durchgemischt werden.

41. Verfahren nach Anspruch 40, dadurch gekennzeichnet, dass die Durchmischung der Komponenten durch Extrudieren erfolgt.

42. Verfahren nach Anspruch 40 oder 41, dadurch gekennzeichnet, dass der nach der Durchmischung der Komponenten erhaltene Pulverlack bei einer Temperatur im Bereich von 50 bis 100° C in einem Zeitraum von einer Stunde bis zu mehreren Tagen getempert wird.

43. Verfahren nach einem der Ansprüche 29 bis 42, dadurch gekennzeichnet, dass der Pulverlack mittels elektrostatischer Aufladung auf die Schweissnaht des Metallbehälters aufgebracht wird.

44. Verfahren nach Anspruch 43, dadurch gekennzeichnet, dass der Pulverlack unmittelbar nach dem Schweissvorgang auf die noch heisse Schweissnaht aufgebracht wird.

45. Verfahren nach einem der Ansprüche 29 bis 44, dadurch gekennzeichnet, dass ein bei Umgebungstemperatur lagerbeständiger Pulverlack eingesetzt wird.

46. Verfahren nach einem der Ansprüche 29 bis 45, dadurch gekennzeichnet, dass der die Schweissnaht des Metallbehälters abdeckende Pulverlack durch rasches Erhitzen auf Temperaturen $\geq 200^\circ$ C zu einem flexiblen Duroplasten gehärtet wird.

47. Verfahren nach Anspruch 46, dadurch gekennzeichnet, dass der die Schweissnaht des Metallbehälters abdeckende Pulverlack durch rasches Erhitzen auf eine Temperatur im Bereich von 230 bis 350$^\circ$ C zu einem flexiblen Duroplasten gehärtet wird.

48. Verfahren nach Anspruch 46 oder 47, dadurch gekennzeichnet, dass der die Schweissnaht des Metallbehälters abdeckende Pulverlack nach einem vorgegebenen Temperaturprogramm auf Temperaturen im Bereich von 230 bis 350$^\circ$ C erhitzt und zu einem flexiblen Duroplasten gehärtet wird.

49. Verfahren nach einem der Ansprüche 46 bis 48, dadurch gekennzeichnet, dass der Metallbehälter nach dem Aufbringen des Pulverlacks auf die Schweissnaht in einem Durchlaufofen in kurzer Zeit auf die Härtungstempera-

0136263

tur des Pulverlacks erhitzt wird, wodurch der Pulverlack zu einem flexiblen Duroplasten gehärtet wird.

50. Verfahren nach Anspruch 49, dadurch gekennzeichnet,
dass der Metallbehälter nach dem Aufbringen des Pulverlacks auf die Schweissnaht in einem Durchlaufofen
einem in Durchlaufrichtung vorgegebenen Temperaturprofil ausgesetzt wird, wodurch der Pulverlack zu
einem flexiblen Duroplasten gehärtet wird.

51. Verfahren nach einem der Ansprüche 46 bis 50, dadurch
gekennzeichnet, dass der die Schweissnaht des Metallbehälters abdeckende Pulverlack in 3 bis 20 Sekunden
gehärtet wird.

52. Verfahren nach einem der Ansprüche 29 bis 51, dadurch
gekennzeichnet, dass dem Pulverlack ein aus der Gruppe: Verlaufmittel, Pigment, Füllstoff, Verdickungsmittel, oder deren Mischung ausgewählter Zusatz zugegeben wird.

53. Verfahren nach Anspruch 52, dadurch gekennzeichnet,
dass dem Pulverlack maximal 30 Gew.-% Füllstoff zugesetzt wird, bezogen auf das Gesamtgewicht des Pulverlacks = 100.